Europäisches Patentamt

European Patent Office

Office européen des brevets

(19)

(11) Numéro de publication : **0 103 522**
**B1**

# (12) FASCICULE DE BREVET EUROPÉEN

(45) Date de publication du fascicule du brevet :
05.03.86

(21) Numéro de dépôt : 83401774.1

(22) Date de dépôt : 12.09.83

(51) Int. Cl.⁴ : **A 01 M   7/00**

(54) **Appareil mobile pour la pulvérisation d'un liquide de traitement des plantes.**

(30) Priorité : 13.09.82 FR 8215421

(43) Date de publication de la demande :
21.03.84 Bulletin 84/12

(45) Mention de la délivrance du brevet :
05.03.86 Bulletin 86/10

(84) Etats contractants désignés :
BE DE FR GB IT

(56) Documents cités :
EP-A- 0 085 597
DE-A- 1 607 387
FR-A- 1 564 543
FR-A- 2 100 130
FR-A- 2 305 116
FR-A- 2 373 229
GB-A- 2 014 834

(73) Titulaire : TECNOMA
54, Rue Marcel Paul
F-51206 Epernay (FR)

(72) Inventeur : Bailu, Patrick Jean-Marie
4, Rue du Général Baratier
F-51100 Reims (FR)

(74) Mandataire : de Boisse, Louis et al
CABINET DE BOISSE 37, Avenue Franklin D. Roosevelt
F-75008 Paris (FR)

EP 0 103 522 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un appareil mobile pour la pulvérisation d'un liquide de traitement des plantes.

L'une des formes de réalisation d'un tel appareil mobile pour la pulvérisation, qui est décrite dans la demande de brevet européen EP-A1-0 085 597 appartenant à l'état de la technique au sens de l'article 54, paragraphe 3, de la convention sur la délivrance de brevets européens, et qui est illustrée notamment sur sa figure 5, comporte un cadre-support porté par un véhicule, tracteur ou remorqué, dans une position perpendiculaire à la direction d'avance du véhicule, un bâti rectangulaire, suspendu au cadre-support par l'intermédiaire d'une rotule, portée par le cadre-support, et d'une biellette articulée, interposée entre la rotule et le milieu du côté supérieur du bâti rectangulaire. D'autre part, au moins un organe rigide de longueur réglable, tel qu'un vérin, est interposé entre la rotule ou le cadre-support, solidaire du véhicule, et un point du bâti rectangulaire, écarté de l'articulation correspondante de la biellette.

Avec cette forme de réalisation décrite dans la demande de brevet citée précédemment, le réglage de la longueur de l'organe rigide, par exemple du vérin, permet de maintenir, en service, les côtés latéraux du bâti rectangulaire, toujours parallèles au plan longitudinal de symétrie du véhicule et, par suite, de maintenir les rampes latérales de pulvérisation, qui sont fixées aux côtés latéraux dudit bâti rectangulaire, sensiblement perpendiculaires au plan longitudinal de symétrie du véhicule. De ce fait, lorsque par exemple le véhicule qui porte ou tire l'appareil mobile de pulvérisation se déplace dans une direction perpendiculaire à la ligne de plus grande pente d'un terrain incliné, à laquelle son plan longitudinal de symétrie est par suite sensiblement perpendiculaire, la disposition qui vient d'être rappelée permet, par un réglage approprié de la longueur de l'organe rigide, de maintenir constamment les rampes latérales de pulvérisation sensiblement parallèles à la ligne de plus grande pente du terrain, et, par suite, à égale distance de celui-ci, en tous les points des rampes de pulvérisation. Cette disposition permet donc de réaliser une pulvérisation sur des plantes poussant sur un terrain en pente, dans des conditions d'efficacité et de régularité aussi bonnes que pour des plantes poussant sur un terrain sensiblement horizontal.

Cette forme de réalisation, décrite dans la demande de brevet citée précédemment, offre cependant l'inconvénient suivant : dans le cas où le véhicule tirant ou portant l'appareil mobile de pulvérisation progresse sur un terrain en pente, transversalement à ses lignes de plus grande pente, le réglage de la longueur de l'organe rigide, approprié pour maintenir les côtés latéraux du bâti rectangulaire sensiblement parallèles au plan longitudinal de symétrie du véhicule, a cependant pour effet de décaler ledit bâti rectangulaire par rapport au cadre-support, solidaire du véhicule, dans la direction de la ligne de plus grande pente du terrain, si bien que les deux rampes latérales de pulvérisation cessent d'être équidistantes du plan longitudinal de symétrie du véhicule ; les zones du terrain qui reçoivent le liquide pulvérisé ne sont donc plus symétriques par rapport à la voie de roulement du véhicule, ce qui entraîne, d'un côté, une perte de liquide pulvérisé, et, de l'autre, l'absence de pulvérisation sur une bande de terrain, contiguë à la voie de roulement.

Pour sa part, la demande de brevet au Royaume-Uni N° 2 014 834 décrit un appareil mobile pour la pulvérisation d'un liquide de traitement des plantes comportant au moins une rampe de pulvérisation qui est montée oscillante en dessous d'un axe sensiblement horizontal et parallèle à la direction longitudinale d'avance du véhicule portant ladite rampe. Cette disposition connue permet d'éviter dans une large mesure, grâce à l'inertie de la rampe de pulvérisation, que celle-ci ne suive toutes les oscillations de roulis du véhicule, et qu'elle ne s'écarte ainsi trop souvent du parallélisme au sol horizontal, ce qui nuirait à la régularité de l'épandage.

Par contre, les mouvements ou oscillations de tangage et de lacet sont encore transmis intégralement à la rampe de pulvérisation, si bien qu'ils perturbent encore la régularité de l'épandage.

Le but principal de la présente invention est de remédier aux inconvénients de ces dispositifs connus.

L'appareil mobile pour la pulvérisation d'un liquide de traitement des plantes selon l'invention comporte un élément de support, porté par un véhicule, tracteur ou remorqué, dans une position perpendiculaire à la direction d'avance du véhicule, un élément de bâti rectangulaire portant des rampes de pulvérisation et suspendu à l'élément de support par l'intermédiaire d'une rotule portée par l'élément de support, et d'une biellette articulée, interposée entre la rotule et le milieu du côté supérieur de l'élément de bâti rectangulaire, au moins un organe rigide de longueur réglable, tel qu'un vérin, étant interposé entre la rotule et un point de l'élément de bâti rectangulaire, écarté de l'articulation correspondante de la biellette, appareil dans lequel la rotule est montée sur la partie supérieure d'un organe, dont la partie inférieure est articulée sur le côté supérieur de l'élément de support, et dans lequel un organe rigide supplémentaire de longueur réglable, tel qu'un vérin, a ses extrémités articulées respectivement sur l'élément de support et sur l'organe articulé, les longueurs des organes rigides étant réglées en service de manière que les côtés latéraux de l'élément de bâti rectangulaire soient toujours parallèles au plan longitudinal de symétrie du véhicule et équidistants de ce plan.

Grâce à cette disposition selon la présente invention, les deux rampes latérales de pulvérisation sont maintenues toujours équidistantes du plan longitudinal de symétrie du véhicule, que celui-ci progresse sur un terrain horizontal ou sur un terrain incliné, transversalement à ses lignes de plus grande pente, ce qui évite, dans ce dernier cas, toute perte de liquide de pulvérisation de même que l'absence de pulvérisation sur une bande du terrain, contiguë à la voie de roulement du véhicule.

Dans une forme de réalisation préférée de l'appareil selon la présente invention, la distance entre les articulations supérieure et inférieure de l'organe articulé est sensiblement égale à la longueur de la biellette articulée. De ce fait, les bords supérieurs du cadre-support, solidaires du véhicule, et du bâti rectangulaire, mobiles par rapport à ce cadre-support, sont maintenus, en service, constamment parallèles l'un à l'autre, mais en outre ils sont maintenus sensiblement à la même distance du sol. Par suite, les rampes latérales de pulvérisation, qui sont fixées au bâti rectangulaire, sont elles-mêmes maintenues toujours à la même distance du sol, que celui-ci soit horizontal ou incliné, ce qui favorise encore la régularité et l'efficacité de la pulvérisation réalisée.

A titre d'exemple, on a décrit ci-dessous et illustré schématiquement au dessin annexé une forme de réalisation de l'appareil mobile selon la présente invention, comportant deux rampes latérales de pulvérisation suspendues à l'arrière du véhicule porteur.

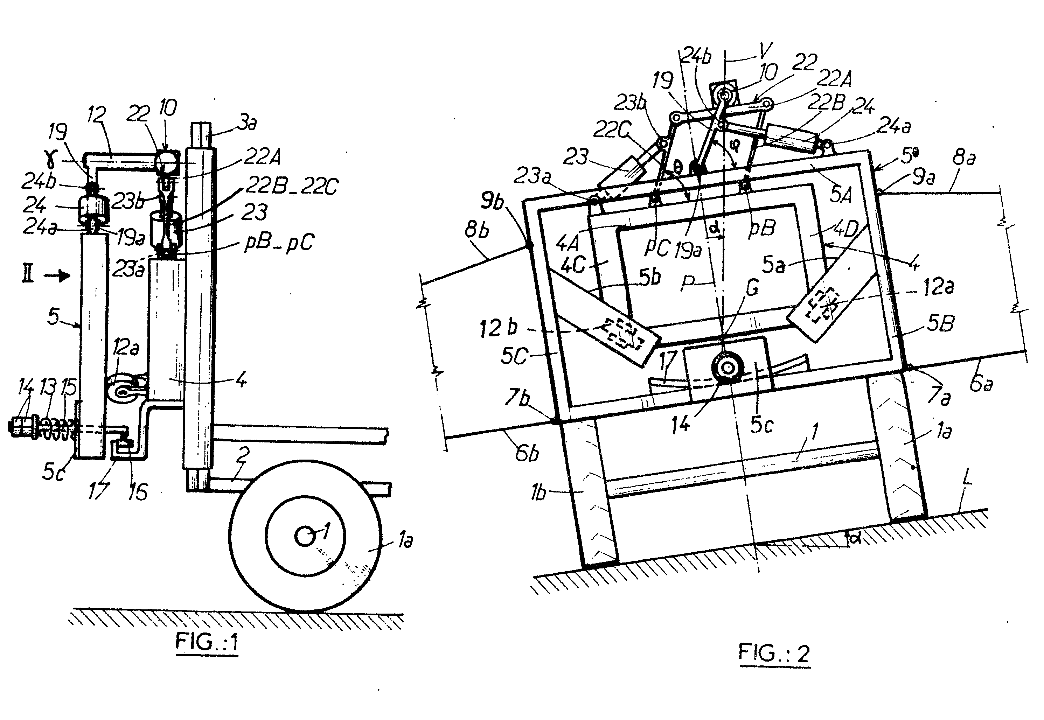

La figure 1 est une vue en élévation et en coupe partielle de cette forme de réalisation, montrant également le train arrière du véhicule porteur. La figure 2 est une vue simplifiée dans le sens de la flèche II de la figure 1, dans le cas où le véhicule porteur progresse perpendiculairement aux lignes de plus grande pente d'un terrain incliné.

Sur les figures 1 et 2, 1 désigne l'essieu, unique ou arrière, du véhicule porteur, dont les roues sont désignées par 1a et 1b. 2 désigne la partie arrière du châssis du véhicule porteur, qui peut être un tracteur agricole, ou une remorque, notamment une remorque portant un grand réservoir — non représenté — de liquide de traitement des plantes. Un cadre-support, sensiblement rectangulaire 4, par exemple en profilés métalliques soudés, est monté coulissant sur des montants tels que 3a (non représentés sur la figure 2), qui sont eux-mêmes soudés à la partie arrière 2 du châssis du véhicule, perpendiculairement à son essieu 1. Un vérin permet de déplacer verticalement le cadre 4 sur les montants tels que 3a.

Un parallélogramme articulé, 22, formé par trois biellettes 22A à 22C, a ses côtés latéraux, 22B et 22C, de même longueur, articulés, par leurs extrémités inférieures, en deux points pB et pC du côté supérieur, 4A, du cadre-support 4, qui sont équidistants du plan longitudinal de symétrie P (figure 2) du véhicule. Un palier à rotule 10 est monté au milieu du côté supérieur, 22A, du parallélogramme articulé 22. Comme visible sur la vue latérale schématique de la figure 1, le côté 22A du parallélogramme articulé 22 est solidaire du boîtier du palier 10, dont la rotule est elle-même solidaire d'une extrémité d'une potence 12, sur l'autre extrémité de laquelle est fixée l'extrémité supérieure d'une biellette verticale 19. L'extrémité inférieure, 19a, de la biellette 19, est elle-même articulée au milieu du côté supérieur 5A d'un bâti rectangulaire 5, dont le plan est parallèle à celui du cadre-support 4.

Un premier organe rigide de longueur réglable, notamment un vérin 23, a ses extrémités articulées, l'une, en 23a, en un point du côté supérieur, 4A, du cadre-support 4, plus éloigné de son milieu que l'articulation pC, notamment à proximité de l'extrémité gauche, sur la figure 2, dudit côté supérieur 4A, tandis que l'autre extrémité du vérin 23, notamment de sa tige, est articulée, en 23b, sur le parallélogramme articulé 22, notamment sur son côté latéral 22C. Un second organe rigide, de longueur réglable, notamment un second vérin 24, a également ses extrémités articulées, l'une, en 24a, en un point du côté supérieur 5A du bâti rectangulaire 5, écarté de son milieu 19a, et notamment voisin de l'extrémité droite dudit côté supérieur 5A, tandis que l'autre extrémité du vérin 24, et notamment de sa tige, est articulée, en 24b, en un point intermédiaire de la biellette 19.

Deux rampes latérales de pulvérisation, 6a et 6b, qui peuvent être d'un type quelconque, sont fixées aux côtés latéraux, 5B et 5C, du bâti rectangulaire 5, par exemple perpendiculairement à ses côtés latéraux, comme visible sur la figure 2. Des haubans, 8a et 8b, peuvent être prévus pour supporter les extrémités des rampes de pulvérisation 6a et 6b.

Vers les coins inférieurs de la face arrière du cadre rectangulaire 4, deux galets, 12a et 12b, sont montés, par exemple dans des chapes, de façon à tourner librement. Lorsque les plans du cadre 4 et du bâti 5 sont parallèles l'un à l'autre, les galets 12a et 12b peuvent rouler sur des surfaces de roulement appropriées, 5a et 5b (figure 2), montées sur la face arrière dudit bâti rectangulaire 5 et solidaires, par exemple, de ses côtés latéraux. Les galets 12a et 12b, ou tout au moins leurs jantes, sont constitués de préférence en un matériau élastique, assurant un bon amortissement des chocs, par exemple en caoutchouc, en élastomère, en matières synthétiques... etc. D'autre part, un ressort hélicoïdal 13 est comprimé entre un élément en forme de plaque, 5c, solidaire du côté inférieur du bâti rectangulaire 5, d'une part, et d'autre part, une paire d'écrou et de contre-écrou, 14, vissée sur une extrémité d'une tige filetée, 15 ; l'autre extrémité de la tige 15 traverse librement la plaque 5c et s'étend jusqu'à proximité du cadre rectangulaire 4, où ladite extrémité de la tige 15 porte un galet fou 16 ; celui-ci peut rouler, pratiquement sans déplacement axial, dans un chemin de roulement 17, qui, dans la forme de réalisation considérée, est matérialisé par une cornière à section en U, dont une aile est par exemple soudée près du bord inférieur du cadre rectangulaire 4, tandis que son autre aile, sensiblement parallèle au plan du cadre 4, empêche ledit galet 16 de s'échapper. Le chemin de roulement 17 peut être plat ou incurvé en arc de cercle, centré sur l'axe horizontal γ de la rotule 10.

L'appareil mobile de pulvérisation selon la présente invention, qui vient d'être décrit, est utilisé de la façon suivante :

Lorsque le véhicule porteur progresse sur un plan horizontal, son plan longitudinal de symétrie, P, étant par suite vertical, la longueur sortie de la tige du vérin 23 est réglée de manière que les côtés latéraux, 22B et 22C, du parallélogramme articulé 22, soient également verticaux, si bien que le palier à rotule 10, fixé au milieu de son côté supérieur 22A, est également centré dans le plan P. La longueur sortie de la tige du vérin 24 est d'autre part réglée de manière que la biellette 19, c'est-à-dire son axe longitudinal, soit sensiblement perpendiculaire au côté supérieur, 5A, du bâti rectangulaire 5. L'ensemble rigide formé par les composants 5-6a-6b-19-24 peut alors osciller librement, à la façon d'un pendule, en dessous du palier à rotule 10, les mouvements d'oscillation correspondants du bâti rectangulaire 5 étant limités et guidés par rapport au cadre-support 4 par les composants 12a, 13, 14, 15, 16, 17, comme décrit dans la demande de brevet européen précitée EP-A1-0 085 597. Grâce à cette disposition, le bâti rectangulaire 5 peut osciller pendulairement autour de l'axe horizontal, $\gamma$, passant par le centre de la rotule du palier 10, dans un plan vertical sensiblement parallèle à celui du cadre-support 4, de part et d'autre d'une position d'équilibre dans laquelle le centre de gravité G de l'ensemble rigide 5-6a-6b-19-24 se trouve à l'aplomb du palier à rotule 10. Par suite, dans cette position d'équilibre, le côté supérieur 5A du bâti rectangulaire 5 est sensiblement horizontal, tandis que ses côtés latéraux, 5B et 5C, ainsi que la biellette 9, perpendiculaire à 5A, sont sensiblement verticaux ; il en résulte que les deux rampes latérales de pulvérisation, 6a et 6b, sont, dans cette position d'équilibre, parallèles à la surface du sol horizontal, sur lequel elles assurent une pulvérisation régulière, de part et d'autre de la voie de roulement 1a-1b du véhicule porteur. Bien entendu, les différents avantages liés à la suspension pendulaire du bâti rectangulaire 5, portant les rampes de pulvérisation 6a et 6b, qui ont été indiqués dans la demande de brevet précédemment citée, sont également obtenus.

Dans le cas, par contre, où le véhicule porteur progresse dans une direction perpendiculaire à la ligne de plus grande pente L (fig. 2) d'un terrain incliné, ou, plus généralement, dans une direction non parallèle à L, les longueurs sorties des tiges des vérins 23 et 24 sont réglées, selon la présente invention, de la façon suivante : le vérin 23 est réglé de manière à incliner le côté latéral 22C du parallélogramme articulé 22 d'un angle $\theta$ inférieur à 90 degrés, sur le côté supérieur, 4A, du cadre-support 4, ce qui a pour effet de déplacer le palier à rotule 10 de la longueur $l22 \cdot \cos \theta$ vers la droite de la figure 2, en désignant par $l22$ les longueurs des deux côtés latéraux du parallélogramme articulé 22. Ensuite, ou bien en même temps, on règle le vérin 24 de manière à incliner la biellette 19 d'un angle $\varphi$, compris entre 0 et 90 degrés, sur le côté 5A du bâti rectangulaire 5, de manière que son articulation inférieure, 19a, et par suite le milieu du côté supérieur 5A du bâti rectangulaire 5, soient ramenés dans ledit plan P, grâce à un déplacement vers la gauche de la fig. 2, d'amplitude $l19 \cdot \cos \varphi$, $l19$ étant la longueur de la biellette 19, c'est-à-dire la distance entre les axes de ses deux articulations extrêmes ; cette condition d'égalité des amplitudes, qui ramène l'articulation 19a dans le plan P, se traduit par la relation : (1) $l19 \cdot \cos \varphi = l22 \cdot \cos \theta$.

La position d'équilibre du système pendulaire doit être en outre telle que, selon la présente invention, les rampes de pulvérisation 6a et 6b soient parallèles à la ligne de plus grande pente L, de même, par suite, que le côté supérieur, 5A, du bâti rectangulaire 5. Si l'on désigne alors par V la verticale qui, dans cette position d'équilibre du système pendulaire, illustrée sur la figure 2, passe à la fois par le centre du palier à rotule 10 et par le centre de gravité G de l'ensemble pendulaire, ladite verticale V fait, avec le plan P, un angle $\alpha$ égal à la pente de la ligne L, si bien que l'angle $\varphi$ est défini par la condition :

$$\frac{l19 \cdot \cos \varphi}{l19 \cdot \sin \varphi + D} = \operatorname{tg} \alpha, \tag{2}$$

dans laquelle D désigne la distance de G au milieu du côté 5A du bâti rectangulaire 5.

Cette relation (2) montre donc que, en fait, c'est l'angle $\varphi$, et par suite la longueur totale du vérin 24, qui doit être déterminé en fonction de la pente $\alpha$ de la ligne L, la valeur de l'angle $\theta$ pouvant être alors déduite de celle de l'angle $\varphi$ par la relation (1) précédente.

Par ailleurs, on peut montrer facilement que, lors des réglages précédemment mentionnés des longueurs des vérins 23 et 24, il se produit un abaissement $\Delta h$ du bâti rectangulaire 5 par rapport au cadre-support 4, dont la valeur est donnée par la relation :

$$\Delta h = l22(1 - \sin \theta) - l19(1 - \sin \varphi) \tag{3}$$

Il est possible d'éviter que l'adaptation de l'appareil mobile de pulvérisation selon la présente invention, au travail sur une pente d'angle $\alpha$, ne se traduise par une réduction de la distance au sol des rampes de pulvérisation 6a et 6b, en donnant aux côtés latéraux, 22B et 22C, du parallélogramme articulé, 22, une longueur, $l22$, pratiquement égale à la longueur $l19$, de la biellette 19. En effet, la relation (1) précédente montre que, dans ce cas, $\theta = \varphi$, si bien qu'il résulte de la relation précédente (3) que $\Delta h = 0$.

La présente invention n'est pas limitée à la forme de réalisation précédemment décrite. Elle englobe toutes ses variantes, dont quelques-unes vont être indiquées, seulement à titre d'exemples. Le parallélogramme articulé 22 pourrait être remplacé par une seconde biellette, sur l'extrémité supérieure de laquelle serait monté le palier à rotule 10, son extrémité inférieure étant par contre articulée vers le milieu du côté supérieur, 4A, du cadre-support 4. Dans ce cas également, la seconde biellette aurait avantageusement la même longueur que la première biellette, 19. La présente invention est également applicable à un appareil mobile comportant une seule rampe de pulvérisation. Les vérins 23 et 24 pourraient être remplacés par d'autres organes rigides, de longueur réglable. Les vérins hydrauliques ont cependant l'avantage de pouvoir être télécommandés à partir de la cabine du véhicule porteur ou tracteur. Les réglages de leurs longueurs respectives pourraient également être aisément automatisés au moyen d'un calculateur, numérique ou analogique, déterminant les valeurs des angles θ et φ à l'aide des relations (1) et (2) précédemment indiquées, à partir de la pente α du terrain dans la direction transversale à celle du déplacement de l'appareil mobile, cette pente étant par exemple mesurée et transmise au calculateur par des moyens automatiques connus.

## Revendications

1. Appareil mobile pour la pulvérisation d'un liquide de traitement des plantes, comportant un élément de support (4), porté par un véhicule (1), tracteur ou remorqué, dans une position perpendiculaire à la direction d'avance du véhicule (2), un élément de bâti rectangulaire (5), portant des rampes de pulvérisation (6a, 6b) et suspendu à l'élément de support (4) par l'intermédiaire d'une rotule (10) portée par l'élément de support (4), et d'une biellette articulée (19) interposée entre la rotule (10) et le milieu du côté supérieur (5A) de l'élément de bâti rectangulaire (5), au moins un organe rigide de longueur réglable, tel qu'un vérin (24), étant interposé entre la rotule (10) et un point (24a) de l'élément de bâti rectangulaire (5), écarté de l'articulation correspondante (19a) de la biellette (19), appareil dans lequel la rotule (10) est montée sur la partie supérieure d'un organe (22), dont la partie inférieure est articulée sur le côté supérieur (4A) de l'élément de support (4), et dans lequel un organe rigide supplémentaire de longueur réglable, tel qu'un vérin (23), a ses extrémités articulées respectivement sur l'élément de support (4) et sur l'organe articulé (22), les longueurs des organes rigides (23, 24) étant réglées en service de manière que les côtés latéraux (5B, 5C) de l'élément de bâti rectangulaire (5) soient toujours parallèles au plan longitudinal de symétrie (P) du véhicule (1) et équidistants de ce plan.

2. Appareil selon la revendication 1, caractérisé en ce que l'organe articulé est une biellette supplémentaire, sur l'extrémité supérieure de laquelle est montée la rotule (10), son extrémité inférieure étant articulée vers le milieu du côté supérieur (4A) de l'élément de support (4).

3. Appareil selon la revendication 1, caractérisé en ce que l'organe articulé est un parallélogramme articulé (22), vers le milieu du côté supérieur (22A) duquel est monté la rotule (10), les extrémités inférieures de ses côtés latéraux étant articulées en deux points (pB, pC) du côté supérieur (4A) de l'élément de support (4), équidistants de son milieu.

4. Appareil selon l'une quelconque des revendications 1 à 3, caractérisé en ce que la distance entre les articulations supérieure et inférieure de l'organe articulé (22) est sensiblement égale à la longueur de la première biellette articulée (19).

5. Appareil selon l'une quelconque des revendications 1 à 4, caractérisé en ce que le premier organe rigide de longueur réglable, tel qu'un vérin (24), a ses extrémités articulées respectivement sur l'élément de bâti rectangulaire (5) et sur la première biellette articulée (19).

6. Appareil selon l'une quelconque des revendications 1 à 5, caractérisé par le fait que des galets (12a, 12b) sont montés fous sur l'un des deux éléments (4 et 5), de façon à rouler normalement sur des surfaces appropriées (5a, 5b) de l'autre élément (5 ou 4), et que des moyens sont prévus pour rappeler les galets (12a, 12b) au contact desdites surfaces de roulement (5a, 5b).

7. Appareil selon la revendication 6, caractérisé en ce que l'élément de bâti (5) de la rampe de pulvérisation est suspendu à la rotule (10) par au moins un bras (12) qui s'étend, à partir dudit élément de bâti (5), en direction de la rotule (10) et de l'élément de support (4), et que les surfaces de roulement (5a, 5b) se trouvent, lorsqu'elles sont en contact avec les galets (12a, 12b), dans un plan sensiblement vertical, passant entre l'élément de bâti (5) et la rotule (10).

8. Appareil selon l'une quelconque des revendications 6 et 7, caractérisé en ce que les moyens de rappel sont des moyens élastiques, disposés de façon à pousser normalement les galets (12a, 12b) et les surfaces de roulement (5a, 5b) en contact les uns avec les autres.

9. Appareil selon l'une quelconque des revendications 6 à 8, caractérisé par le fait qu'au moins la jante des galets (12a, 12b) est en un matériau élastique.

10. Appareil selon la revendication 8, caractérisé en ce que les moyens élastiques comprennent un ressort (13) comprimé entre l'élément de bâti (5) de la rampe et une butée arrière (14), solidaire d'une extrémité d'une tige (15), qui traverse librement ledit élément de bâti (5), et dont l'autre extrémité porte un galet fou (16), qui peut rouler, sans déplacement axial, dans un chemin de roulement (17), solidaire de l'élément de support (4).

11. Appareil selon la revendication 10, caractérisé en ce que le chemin de roulement (17) est incurvé en arc de cercle centré sur l'axe horizontal (γ) de la rotule (10).

## Claims

1. A mobile apparatus for spraying a plant treatment liquid, comprising a support member (4), carried by a tractor or trailer vehicle (1) in a position at right angle to the direction (2) of the forward movement of the vehicle, a rectangular framework member (5) carrying spraying racks (6a, 6b) and suspended from the support member (4) through a ball joint (10) carried by said support member (4) and through a first articulated link rod (19) interposed between the ball joint (10) and the middle of the upper side (5A) of the rectangular framework member (5), at least one first rigid component of variable length, such as a jack (24) interposed between the ball joint (10) and a predetermined point (24a) of the rectangular framework member (5), which point is spaced from the corresponding articulation (19a) of said link rod (19), wherein the said ball joint (10) is mounted on the upper part of an articulated component (22) having a lower part articulated on the upper side (4A) of the support member (4), and a second rigid component of variable length, such as jack (23), having its ends articulated respectively on said support member (4) and on said articulated component (22), and the lengths of said first and second rigid components (23, 24) being so adjusted in operation that the lateral sides (5B, 5C) of the rectangular framework member (5) are always parallel to the longitudinal plane of symmetry (P) of the vehicle and equidistant from this plane.

2. An apparatus according to claim 1, wherein the articulated component is a second link rod on the upper end of which is mounted the ball joint (10), its lower end being articulated near the middle of the upper side (4A) of the support member (4).

3. An apparatus according to claim 1, wherein the articulated component is an articulated parallelogram (22) near the middle of the upper side (22A) of which is mounted the ball joint (10), the lower ends of its lateral sides being articulated at two points (PB, PC) of the upper side (4A) of the support member (4), which are equidistant from its middle.

4. An apparatus according to anyone of claims 1 to 3, wherein the distance between the upper and lower articulations of the articulated component (22) is substantially equal to the length of the first articulated link rod (19).

5. An apparatus according to anyone of claims 1 to 4, wherein the first rigid component of variable length, such as a jack (24) has its ends articulated respectively on the rectangular framework member (5) and on the first articulated link rod (19).

6. An apparatus according to anyone of claims 1 to 5, wherein roller wheels (12a, 12b) are mounted idly on one of the two support and frame members (4 and 5) so as to roll normally on rolling surfaces (5a, 5b) of the other of said two members (5 or 4), and means are provided to bias the roller wheels (12a, 12b) into contact with said rolling surfaces (5a, 5b).

7. An apparatus according to claim 6, wherein the framework member (5) of the spraying rack is suspended from the ball joint (10) by at least one arm (12) which extends from said framework member (5) in the direction of the ball joint (10) and of the support member (4), and the rolling surfaces (5a, 5b) are located, when in contact with the roller wheels (12a, 12b) in a substantially vertical plane passing between the framework member (5) and the ball joint (10).

8. An apparatus according to claim 6 or 7, wherein the biasing means are elastic means arranged so as normally to push the roller wheels (12a, 12b) and the rolling surfaces (5a, 5b) into contact with each other.

9. An apparatus according to anyone of claims 6 to 8, wherein at least the rim of the roller wheels (12a, 12b) is of an elastic material.

10. An apparatus according to claim 8, wherein the biasing means comprise a spring (13) compressed between the framework member (5) and a rear end stop (14) which is fixed integrally to a rod (15) which passes freely through said framework member (5), the other end of said rod carrying an idle roller wheel (16) adapted to roll, without axial displacement, in a rolling track (17) fixed integrally to the support member (4).

11. An apparatus according to claim 10, wherein the rolling track (17) is curved into an arc of a circle centred on the horizontal axis (γ) of the ball joint (10).

## Patentansprüche

1. Bewegliche Vorrichtung zum Versprühen einer Flüssigkeit für die Behandlung von Pflanzen, mit einem Tragelement (4), das von einem ziehenden oder gezogenen Fahrzeug (1) in einer zur Fahrtrichtung des Fahrzeuges (2) senkrechten Lage getragen wird, einem rechteckigen Rahmenelement (5), das Sprühdüsenteile (6a, 6b) trägt und an dem Tragelement (4) aufgehängt ist mittels eines von dem Tragelement (4) getragenen Kugelgelenks (10) und eines Lenkers (19), der zwischen das Kugelgelenk (10) und der Mitte der Oberseite (5A) des rechteckigen Rahmenelementes (5) eingesetzt ist, wobei mindestens ein Versteifungselement änderbarer Länge, z. B. ein Stellmotor (24), zwischen das Kugelgelenk (10) und einen von der entsprechenden Anlenkstelle (19a) des Lenkers (19) entfernten Punkt (24a) des rechteckigen Rahmenelementes (5) eingesetzt ist, in welcher Vorrichtung das Kugelgelenk (10) am oberen Abschnitt eines Bauteiles (22) angebracht ist, dessen unterer Abschnitt an der Oberseite (4A) des Tragelementes (4) angelenkt ist, und in welcher ein zusätzliches Versteifungsteil änderbarer Länge, z. B. ein Stellmotor (23), mit seinen Enden an dem Tragelement (4) bzw. dem angelenkten Bauteil (22) angelenkt ist, wobei die Länge der Versteifungsteile (23, 24) im Betrieb so steuerbar ist, daß die Seiten (5B, 5C) des rechteckigen Rahmenteiles (5) zur Symmetrielängsebene (P) des Fahrzeuges (1) immer parallel sind und gleiche Abstände von dieser Ebene haben.

2. Vorrichtung nach Anspruch 1, dadurch gekennzeichnet, daß das angelenkte Bauteil ein zusätzlicher Lenker ist, an dessen oberen Ende das Kugelgelenk (10) angebracht ist, während sein unteres Ende im Bereich der Mitte der Oberseite (4A) des Tragelementes (4) angelenkt ist.

3. Vorrichtung nach Anspruch 1, dadurch gekennzeichnet, daß das angelenkte Bauteil ein gelenkiges Parallelogramm (22) ist, an dessen Oberseite (22A) etwa in seiner Mitte das Kugelgelenk (10) angebracht ist, während die unteren Enden seiner Seite an zwei Punkten (pB, pC) der Oberseite (4A) des Tragelementes (4) mit gleichen Abständen zu seiner Mitte angelenkt sind.

4. Vorrichtung nach einem der Ansprüche 1-3, dadurch gekennzeichnet, daß der Abstand zwischen den oberen und unteren Anlenkpunkten des angelenkten Bauteils (22) im wesentlichen gleich der Länge des ersten Lenkers (19) ist.

5. Vorrichtung nach einem der Ansprüche 1-4, dadurch gekennzeichnet, daß das erste Versteifungsteil änderbarer Länge mit seinen Enden an dem rechteckigen Rahmenelement (5) bzw. an dem ersten Lenker (19) angelenkt ist.

6. Vorrichtung nach einem der Ansprüche 1-5, dadurch gekennzeichnet, daß Leerlaufrollen (12a, 12b) an einem von zwei Bauteilen (4 und 5) so angebracht sind, daß sie normalerweise auf entsprechenden Flächen (5a, 5b) des anderen Teils (5 oder 4) rollen, und daß Rückholmittel vorgesehen sind, die die Rollen (12a, 12b) in Berührung mit den Rollflächen (5a, 5b) halten.

7. Vorrichtung nach Anspruch 6, dadurch gekennzeichnet, daß das Rahmenelement (5) des Sprühdüsenteils an dem Kugelgelenk (10) mittels eines Armes (12) aufgehängt ist, der sich von dem Rahmenteil (5) in Richtung des Kugelgelenkes (10) und des Tragelements (4) erstreckt, und daß die Rollflächen (5a, 5b), wenn sie sich mit den Rollen (12a, 12b) in Berührung befinden, in einer im wesentlichen vertikalen Ebene liegen, die zwischen dem Rahmenteil (5) und dem Kugelgelenk (10) verläuft.

8. Vorrichtung nach einem der Ansprüche 6 und 7, dadurch gekennzeichnet, daß die Rückholmittel elastische Mittel sind, die so angeordnet sind, daß sie normalerweise die Rollen (12a, 12b) und die Rollflächen (5a, 5b) in Anlage miteinander halten.

9. Vorrichtung nach einem der Ansprüche 6-8, dadurch gekennzeichnet, daß mindestens die Felge der Rollen (12a, 12b) aus einem elastischen Material besteht.

10. Vorrichtung nach Anspruch 8, dadurch gekennzeichnet, daß die elastischen Mittel aus einer Feder (13) bestehen, die zwischen dem Rahmenelement (5) und einem rückwärtigen Anschlag (14) zusammengedrückt ist, der mit einem Ende einer Stange (15) fest verbunden ist, die sich frei durch das Rahmenteil (5) erstreckt und deren anderes Ende eine Leerlaufrolle (16) trägt, die ohne Axialverschiebung auf einer mit dem Tragelement (4) verbundenen Rollbahn (17) rollen kann.

11. Vorrichtung nach Anspruch 10, dadurch gekennzeichnet, daß die Rollbahn (10) gekrümmt ist in Form eines Kreisbogens, dessen Mittelpunkt auf der horizontalen Achse (γ) des Kugelgelenks (10) liegt.

FIG.:1

FIG.: 2

0 103 522